# EUROPEAN PATENT APPLICATION

(11) **EP 2 458 104 A1**
(43) Date of publication of application: **30.05.2012**
(21) Application number: 10192936.2
(22) Date of filing: 29.11.2010
(51) Int. Cl.: E04C 1/39, H02G 3/38

(54) **Combination of a number of building blocks each having a recess**

(71) Applicant: Boeve Afbouw B.V., 8152 BE Lemelerveld (NL)
(72) Inventor: Meester, Herman, 8043 XN, Zwolle (NL)
(74) Representative: 't Jong, Bastiaan Jacob

(57) **Abstract**

The invention relates to a combination of a number of building blocks (2), wherein each building block comprises a recess (4,6) extending from one side of the block to the opposite side of the block, the building blocks being arranged in a row such that the recesses of the building blocks form an elongate channel.
The invention also relates to a wall comprising such a combination.

## Description

The invention relates to a combination of a number of building blocks.

Building blocks are typically used to build efficiently external and internal walls of buildings. These building blocks could be of a ceramic material, gypsum or calcareous stone. The used blocks could furthermore be solid or hollow.

Generally, when the block wall is erected, connection points for electricity and the like are arranged in the wall. This requires careful planning, taking the future use of the room bordered by the block wall into account.

To arrange a connection point, a cavity is drilled at the desired position and a channel running from this cavity is grinded in the erected block wall. Tubes for wiring are arranged in this channel and finally these tubes are covered by a finishing layer. The path of the grinded channel is generally up or down and runs to a central connection box at the ceiling. When a tube is arranged in the channel, the tube will have typically a number of turns and twists. Due to these turns and twist it is sometimes difficult to pull wiring through the tube. For electrical wiring, this is generally no problem, but as soon as the wiring is thicker it becomes more difficult.

Furthermore, grinding of channels is generally only done when building the room. Rearranging the tubes afterwards, when other requirements are present for wiring and connection points, involves a lot of work and a lot of dust and is generally not done. As a result, the wiring will be arranged in front of the wall.

Not only electricity cables are nowadays used in a room. Also network cables, control lines, audio cables and video cables are typically used. The tubes arranged in the block wall are due to the turns and twists not suited to pull these kinds of cables through. So, these cables are arranged in front of the block wall, which usually results in a clutter of cables running along the block wall in different directions.

To partially resolve the problem of cluttered cables it is known in the prior art to use hollow skirting board to provide a cable duct. The space behind the hollow skirting board is used to hide the different cables. However, these cables have to exit the formed cable duct and run from the skirting board towards for example a television set or a speaker box.

Another disadvantage of hollow skirting board is the limited space, when skirting board with an aesthetic appearance is desired. The depth of typical hollow skirting board is about 1 centimeter. Such a depth is already small for a few cables. With the increasing number of cables, this becomes more often a bottleneck.

Is is an object of the invention to reduce or even resolve the above mentioned disadvantages.

This object is achieved with a combination according to the preamble, wherein each building block comprises a recess extending from one side of the block to the opposite side of the block, the building blocks being arranged in a row such that the recesses of the building blocks form an elongate channel.

With the combination according to the invention an elongate channel is already formed simply by arranging the building blocks in a row. This eliminates at least partially the requirement of grind channels in a wall after the building blocks have been positioned. So by using the combination according to the invention a lot of dust is prevented.

Furthermore, a central elongate channel is provided, which can function as a backbone for the different cables. Channels from the connection points can run straight to the elongate channel, which simplifies pulling wires through the tubes. The elongate channel can run through a building as a loop.

Because the elongate channel is provided within the building blocks, no protrusions are present on the wall, which would disturb the appearance of the wall.

In a preferred embodiment of the combination according to the invention an elongate profile is arranged in the elongate channel. This elongate profile provides a lining in the formed elongate channel, which has typically a stony surface. The elongate profile furthermore provides a surface to mount objects on, for example a clip to keep the cables together.

In another preferred embodiment of the combination according to the invention the elongate profile has a C-shaped cross section. The C-shape of the profile partially envelopes the bundle of cables running through the elongate channel. Furthermore, the C-shape provides for two elongate flanges bordering the edges of the elongate channel. These flanges can be used for mounting.

In yet another preferred embodiment of the combination according to the invention a cover for covering the elongate channel is provided. This cover could for example be mounted to the flanges of the C-shaped profile arranged in the elongate channel.

Preferably, the cover is a skirting board. Generally a floor is finished by providing a skirting board along the bordering walls. This skirting board can simply cover the elongate channel in the building blocks. Even a hollow skirting board can be used to provide an even larger space defined by the elongate channel and the skirting board for guiding cables and the like.

The invention also relates to a wall comprising a combination according to the invention, wherein the row of building blocks is the leveling layer of the wall. A block wall is typically provided by first arranging a first row of blocks, such that a level surface is created to glue subsequent layers of block on. The height of this first row of blocks is chosen such that for the subsequent rows standard sized blocks can be used and a block wall of exactly the desired height is obtained.

So, because the leveling layer of the wall is already build out of a different type of blocks, it is cost effective to arrange the elongate channel in these types of leveling blocks. This prevents the use of a third type of blocks: leveling blocks, standard wall blocks and blocks providing the elongate channel.

A preferred embodiment of the wall according to the invention comprises a number of rows of building blocks of a second type arranged on top of the leveling layer. This second type of blocks can be the standard sized building blocks.

Accordingly, the wall according to the invention could be formed by a first type of building blocks forming the leveling layer of the wall, wherein the remainder of the wall is formed by a second type of blocks.

Preferably the wall according to the invention comprises at least a cavity for arranging an access opening, and a connection channel running from the cavity to the elongate channel.

By providing access openings in the wall and connection channels running from these access openings to the elongate channel, wiring can be easily arranged and rearranged as the wiring runs through the connection channel to the central, backbone like, elongate channel. This enables predefined positions to feed desired cables in the wall. When an access point for cables is desired, one of the predefined positions is opened and the cables are run through the connection channel and into the elongate channel. As a result the cables are almost out of view with such a wall according to the invention and the cables can easily be rearranged without substantial effort.

The connection channels could be arranged by grinding the channel, or more preferably by providing building blocks, which have a prefabricated channel.

Preferably the connection channel is covered by a finishing layer.

These and other features of the invention will be elucidated in conjunction with the accompanying drawings.
Figure 1 shows a first embodiment of the combination according to the invention in perspective view.
Figure 2 shows a side view of the embodiment of figure 1 with installed cables.
Figure 3 shows an embodiment of a wall according to the invention.
Figure 4 shows a cross sectional view of the wall according to figure 3.
Figure 5 shows a cross sectional view of second embodiment of a wall according to the invention.

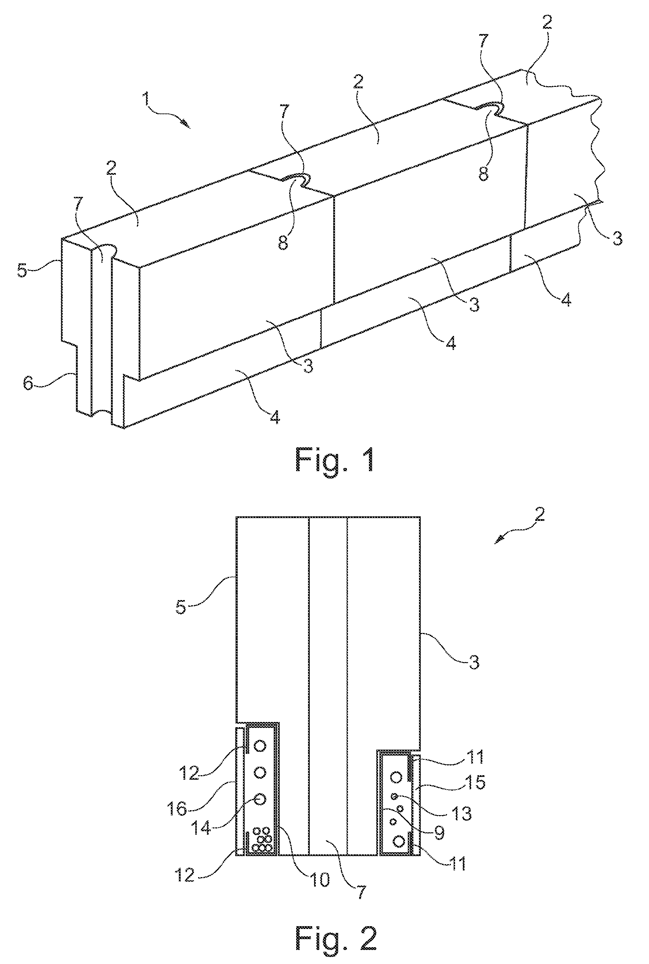

Figure 1 shows a perspective view of an embodiment of a combination 1 according to the invention. This combination 1 has a row of building block 2. Each building block 2 has a front surface 3 with a recess 4 and an opposite back surface 5 with also a recess 6. The recesses 4 of each building block 2 compose an elongate channel for housing cables. Also the recesses 6 on the opposite side of the building block 2 compose such an elongate channel for cables.

Each building block 2 is furthermore provided at the lateral sides with a groove 7 and ridge 8 for connecting adjacent building blocks 2.

Figure 2 shows a side view of a building block 2 arranged in a combination 1 of figure 1. Profiles 9, 10 with a C-shaped cross section are arranged within the elongate channels. Due to the C-shaped cross section flanges 11, 12 respectively are present on the profiles 9, 10. These flanges are used to partially envelope the cables 13, 14 within the profile and to provide a mounting surface for a cover plate 15, 16.

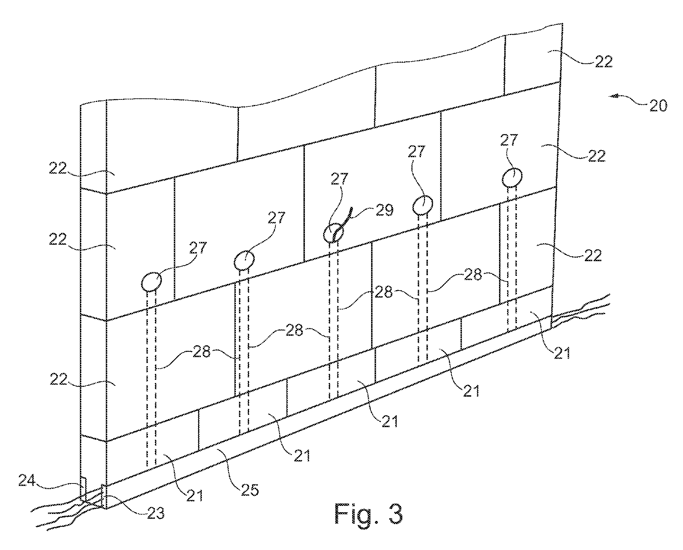

Figure 3 shows an embodiment of a wall 20 according to the invention. This wall 20 has a first row of a first type of building blocks 21 providing the leveling layer of the wall 20. On top of this first row of blocks 21 additional rows of blocks 22 of a second type are arranged.

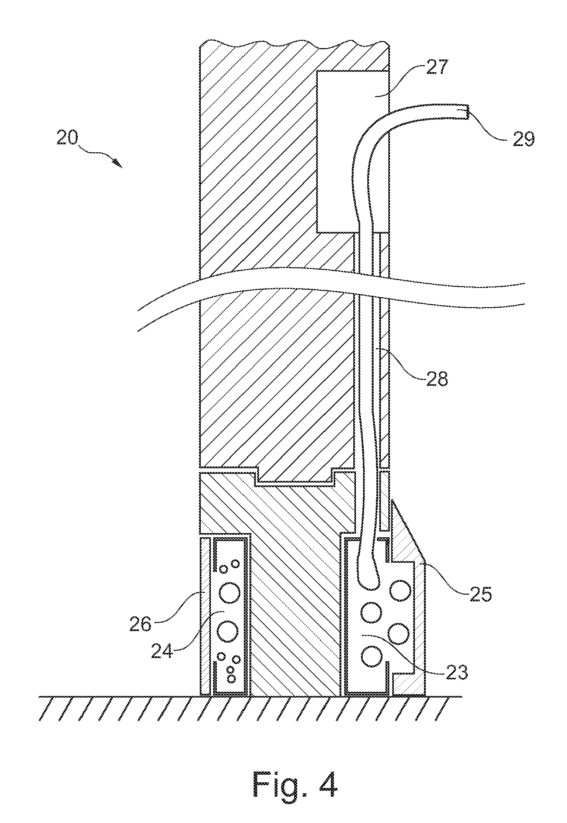

The first type of blocks 21 are provided with recesses resulting in elongate channels 23, 24 on opposite sides of the wall. Both elongate channels 23, 24 are covered by a skirting board 25, 26 (see also figure 4).

The wall 20 is furthermore provided with cavities 27 for providing a connection point. These cavities 27 are arranged at a regular interval, such that the cavities 27 can be found and opened when desired. A connection channel 28 runs from each cavity 27 to the elongate channel 23. It could also be possible to have the connection channels 28 continue above the cavity 27, for example to run to a second cavity 27.

When it is desired to arrange a cable 29 in the wall 20, a cavity 27 is opened and the cable 29 is pulled through the connection channel 28 to the central elongate channel 23. From there the cable 29 can be brought to any desired location, for example to another cavity 27. This allows for a very flexible way of arranging cables 29, which is not limited to the original layout when erecting the wall 20.

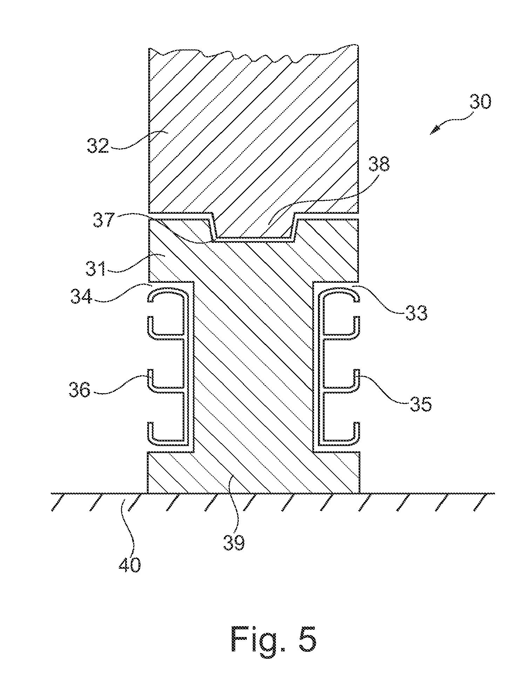

Figure 5 shows a cross sectional view of a second embodiment 30 of a wall according to the invention. The wall 30 has a leveling layer 31 and a first layer 32 of building block on top of the leveling layer 31.

The leveling block 31 has on opposite sides elongate channels 33, 34 in which plastic extruded profiles 35, 36 are arranged. Cables can be arranged in these profiles 35, 36 as explained in previous embodiments.

A groove 37 is arranged at the top of the building block 31 to accommodate a ridge 38 of the building block 32 above.

The leveling layer building block 31 is furthermore provided with a base 39, such that the elongate channels 33, 34 are at a distance from the floor 40. This is of advantage when at a later stage a cover floor is arranged or a tile floor, as the elongate channels 33, 34 will still be fully accessable.

## Claims

1. Combination of a number of building blocks, wherein each building block comprises a recess extending from one side of the block to the opposite side of the block, the building blocks being arranged in a row such that the recesses of the building blocks form an elongate channel.

2. Combination according to claim 1, comprising an elongate profile arranged in the elongate channel.

3. Combination according to claim 2, wherein the elongate profile has a C-shaped cross section.

4. Combination according to any of the preceding claims, comprising a cover for covering the elongate channel.

5. Combination according to claim 4, wherein the cover is a skirting board.

6. Wall comprising a combination according to any of the preceding claims, wherein the row of building blocks is the leveling layer of the wall.

7. Wall according to claim 6 further comprising a number of rows of building blocks of a second type arranged on top of the leveling layer.

8. Wall according to claim 7, comprising at least a cavity for arranging an access opening, and a connection channel running from the cavity to the elongate channel.

9. Wall according to claim 8, wherein the connection channel is covered by a finishing layer.
